(19) **Europäisches Patentamt**

**European Patent Office**

**Office européen des brevets**

(11) **EP 1 029 879 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.[7]: **C08G 18/70**, C08G 18/62

(21) Anmeldenummer: **00109963.9**

(22) Anmeldetag: **11.12.1997**

(54) **Wässrige Dispersion enthaltend ein oberflächendesaktiviertes Polyisocyanat**

Aquous dispersion containing a surface-deactivated polyisocyanate

Dispersion aqueuse contenant un polyisocyanate desactivé en surface

(84) Benannte Vertragsstaaten:
**AT BE CH DE DK ES FI FR GB GR IE IT LI LU MC NL PT SE**

(43) Veröffentlichungstag der Anmeldung:
**23.08.2000 Patentblatt 2000/34**

(62) Dokumentnummer(n) der früheren Anmeldung(en) nach Art. 76 EPÜ:
**97810969.2 / 0 922 720**

(73) Patentinhaber: **Bayer MaterialScience AG**
**51368 Leverkusen (DE)**

(72) Erfinder: **Abend, Thomas**
**9010 St. Gallen (CH)**

(56) Entgegenhaltungen:

| | |
|---|---|
| **EP-A- 0 131 903** | **EP-A- 0 204 970** |
| **EP-A- 0 417 540** | **EP-A- 0 728 787** |
| **DE-A- 2 327 579** | **DE-A- 4 022 602** |
| **US-A- 4 478 894** | **US-A- 5 159 011** |

- **BLUM R. UND SCHUPP H.: 'One-Component Polyurethane Systems by Deactivation of Dispersed Solid Isocyanates' PROGRESS IN ORGANIC COATINGS Bd. 18, 1990, Seiten 275 - 288**
- **DATABASE INTERNET, , INTERNET Nr. HTTP://WWW.CPKELCO.COM/XANTHAN/INDUSTRIAL/INDEX, KELCO CORP.: "Kelzan Xanthan Gum",**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft wässrige Dispersionen, die oberflächendesaktivierte Polyisocyanate und isocyanatreaktive Polymere enthalten.

JP 09 188,735 beschreibt ein bei Raumtemperatur lagerstabiles Gemisch aus dispergierten funktionellen Polymeren mit einem Polyisocyanat. Eine Vordispersion bestehend aus Polyisocyanat, polymerem Stabilisator und einer hydrophoben Flüssigkeit (als Dispersionsmittel) wird in einer weiteren wässerigen Lösung oder Dispersion eines isocyanatreaktiven Polymeren unter Zuhilfenahme eines o/w Emulgators und Schutzkolloids emulgiert. Nach der Applikation und dem Verdunsten des Wassers reagiert das Polyisocyanat spontan unter Vernetzung mit den funktionellen Gruppen des Polymeren.

In DE 31 12 054, DE 32 28 723 und DE 32 28 724 werden pulverförmige, feinteilige feste Polyisocyanate mit Teilchendurchmessern bis 150 μm oberflächlich desaktiviert. Durch die Oberflächenbeschichtung behalten die Polyisocyanate ihren Isocyanatgehalt und ihre Reaktivität und bilden ein stabiles Einkomponentensystem auch in Wasser oder wässerigen Lösungsmitteln.

Im DE 32 28 724 und DE 32 30 757 werden oberflächendesaktivierte pulverförmige Diisocyanate mit Polyolen und wässerigen Dispersionspolymeren, die funktionelle Gruppen enthalten zu einer lagerstabilen reaktiven Paste kombiniert. Durch Aufheizen dieser wasserhaltigen Paste auf 140°C, d.h. über die Reaktionstemperatur des Polyisocyanates vernetzen diese beiden Komponenten und es wird ein leicht angeschäumter elastischer Belag erhalten.

Ein Verfahren zur Herstellung stabiler Dispersionen feinteiliger oberflächendesaktivierten Isocyanate wird in DE 35 17 333 beschrieben. Die resultierenden stabilen Dispersionen eignen sich als Vernetzungsmittel.

Eine Verwendung der wässerigen Dispersionen von oberflächendesaktivierten festen, feinteiligen Polyisocyanaten als Vernetzer in Textilpigmentdruckpasten und Färbeflotten wird in DE 35 29 530 dargelegt. Im Anschluss an den Applikationsvorgang werden die Textilpigmentdruckpasten und Färbeflotten mit Heissluft oder Dampf auf dem Gewebe fixiert.

Nachteil dieser in diesen Dokumenten beschriebenen Systeme ist jedoch, dass die Arbeitsschritte Applikation und Aushärten bzw. Vernetzen nicht getrennt werden können, was sowohl aus ökonomischen wie logistischen Gründen bei einer Vielzahl von Anwendungen wünschenswert erscheint.

So würde ein Substrat, das eine lagerstabile latent-reaktive Schicht oder Pulver trägt die Möglichkeit eröffnen, an dem Ort aufgetragen zu werden, an dem die entsprechenden Gerätschaften vorhanden sind, eine vorbestimmbare Zeitspanne gelagert zu werden und anschliessend zu dem Ort transportiert zu werden, an dem die Verarbeitung zu weiteren Zwischenprodukten oder zum Endprodukt erfolgt.

Lagerstabile, latent-reaktive Massen oder Schichten werden in WO 93/25599 beschrieben. Diese bestehen aus isocyanatfunktionellen Polymeren, die einen Schmelzpunkt über 40°C aufweisen und oberflächendesaktivierten Polyisocyanaten. Zur Herstellung des Gemisches werden die Komponenten auf Temperaturen aufgeschmolzen, die wesentlich über dem Erweichungspunkt des Polymeren liegen. Der apparative Aufwand für die Herstellung und die Applikation dieser Massen sind neben den Energiekosten erheblich. Zudem können in diesem Systemen aus Stabilitäts- und Verarbeitungsgründen nur oberflächendesaktivierte Polyisocyanate verwendet werden, die eine Vernetzungstemperatur von über 80 °C aufweisen. Weiterhin ist eine gezielte und kontrollierte inhomogene Vermischung der Komponenten Gegenstand der Anmeldung. Diese erfordert jedoch aufwendige Arbeitsschritte.

Aufgabe der vorliegenden Erfindung ist es lagerstabile, latent-reaktive, weitgehend trockene Schichten oder Pulver herzustellen, bei dem auch desaktivierte Polyisocyanate mit Reaktionstemperaturen unter 80°C einsetzbar sind, die sich unter Umweltschutzgesichtspunkten vorteilhaft verhalten und zusätzlich kostengünstig produziert werden können.

Erfindungsgemäss wird dies durch durch die Kennzeichen der unabhängigen Ansprüche gelöst.

Lagerstabile, latent-reaktive Schichten oder Pulver können hergestellt werden durch die Verwendung einer im wesentlichen wässrigen Dispersion, die wenigstens ein oberflächendesaktiviertes Polyisocyanat und wenigstens ein dispergiertes oder gelöstes mit Isocyanat reaktives Polymer enthält.

Aus den erfindungsgemäßen Dispersionen lassen sich lagerstabile, latent-reaktive Schichten oder Pulver herstellen indem eine Dispersion gemäß Anspruch 1 dadurch bereitgestellt wird, dass

a.) eine wässerige Dispersion oder Lösung aus wenigstens einem gegenüber Isocyanaten reaktiven Polymer gemäß Anspruch 1 und

b.) wenigstens ein im wesentlichen in Wasser suspendiertes oberflächendesaktiviertes, festes, feinteiliges Polyisocyanat gemischt werden,

c) diese Mischung wahlweise auf ein Substrat in einer vorbestimmbaren Schichtstärke aufgetragen wird und

d.) das Wasser des Gemisches unterhalb der Reaktionstemperatur des Isocyanates entfernt wird,

so dass die dadurch erhaltenen im wesentlichen trockenen und wasserfreien Schichten oder Massen bei Reaktionstemperaturen unterhalb der Reaktionstemperatur von Polyisocyanat und Polymer lagerstabil und latent-reaktiv sind.

Überaschenderweise wurde gefunden, dass das Entfernen des Wassers und Trocknen des Gemisches im Temperaturbereich wahlweise bei

i) Raumtemperatur bis Erweichungstemperatur des funktionellen Polymeren oder

ii) oberhalb der Erweichungstemperatur des Polymem

erfolgen kann, solange die Reaktionstemperatur des oberflächendesaktivierten Polyisocyanates in keinem der beiden Fälle überschritten wird. Unabhängig davon, ob das Trocknen nach i) oder ii) erfolgt, sind die oberflächendesaktivierten festen, feinteiligen Polyisocyanate nach der Trocknung unverändert und unreagiert in dem weitgehend wasserfreien Polymer bzw. in der im wesentlichen wasserfreien Schicht oder Pulver verteilt und eingebettet. Die Dispersion, Suspension oder Lösung von Polymer und suspendiertem desaktivierten Isocyanat geht in eine kontinuierliche Phase von unvemetztem Polymer über, in dem die unreagierten oberflächendesaktivierten, feinteiligen Isocyanate suspendiert sind.

Im Falle i) resultiert ein wasserfreier, trockener, latent-reaktiver Film oder ein latent-reaktives Pulver, welche bei Raumtemperatur oder bei leicht erhöhter Temperatur lagerfähig ist. Die Reaktionsfähigkeit der oberflächendesaktivierten Isocyanate mit den funktionellen Gruppen des Polymern wird erhalten.

Im Falle ii) resultiert nach dem Verdampfen des Wassers ein geschmolzenes System. Als Beispiel dient das Verkleben eines Laminates aus Folien. Auch in dieser Phase sind die oberflächendesaktivierten Isocyanate unverändert und behalten ihre Reaktivität. Die Verklebung basiert zunächst auf den thermoplastischen Eigenschaften des Polymers.

In beiden Fällen vernetzt das System und es wird unschmelzbar und unlöslich erst bei Überschreiten der Reaktionstemperatur des oberflächendesaktivierten Isocyanats. Dies erfolgt nach einer vorbestimmbaren Zeitspanne.

In gewissen Fällen genügt ein kurzfristiges Überschreiten der Reaktionstemperatur, um die Vernetzungsreaktion auszulösen. Die Reaktions- oder Aufdicktemperaturen der desaktivierten Polyisocyanate sollten dabei Temperaturen im Bereich von 30°C bis 180°C aufweisen, bevorzugt im Bereich zwischen 40°C und 150°C liegen.

Aufdickung- oder Reaktionstemperatur bezeichnet die Temperatur, bei der sich die oberflächendesaktivierende Schicht des Isocyanats im Polymer löst oder auf andere Weise zerstört wird. Das Polyisocyanat wird freigesetzt und im Polymer gelöst. Die Endaushärtung erfolgt durch Diffusion und Reaktion des Polyisocyanates mit den funktionellen Gruppen des Polymeren unter Viskositätsanstieg und Vernetzung. Die Aufdickungs- und Reaktionstemperatur liegt je nach Art des oberflächendesaktivierten Polyisocyanates oberoder unterhalb der Erweichungstemperatur des Polymeren.

Die Stabilität des unreagierten Systems, die Reaktionstemperatur und der Reaktionsverlauf werden bestimmt durch die Art des Polyisocyanats, durch Art und Menge des Oberflächenstabilisators, durch den Löslichkeitsparameter des funktionellen Polymers sowie durch Katalysatoren, Weichmacher und andere Hilfsmittel. Diese werden weitgehend in den eingangs erwähnten Schutzrechte beschrieben.

Weiterhin sind der Applikation nachfolgende Bearbeitungsschritte des die Schicht oder das Pulver tragenden Substrates Gegenstand der Erfindung. Diese umfassen Schritte, wie sie z.B. bei der Bearbeitung des Substrates in seine endgültige Form durch Stanzen, Zuschneiden, Biegen, Falzen, Laminieren, etc.notwendig sind. Dabei wurde weiterhin unerwarteterweise festgestellt, dass der Film oder das Pulver in ihrem plastischen Zustand verarbeiten werden kann. Selbst nach Tagen oder Monaten kann die Schicht oder das Pulver auf Temperaturen oberhalb der Erweichungstemperatur des Polymern erhitzt werden, ohne dass Reaktion zwischen den funktionellen Gruppen des Polymern und den oberflächendesaktivierten Isocyanaten eintritt. Die Verarbeitung im plastischen Zustand kann dabei sogar unter mehrmaligem Erwärmen und Kühlen erfolgen.

Die Filme oder Pulver sind vozugsweise lagerstabile, latent-reaktive Klebstoffsysteme.

Als Polyisocyanate für das Verfahren sind alle Di- oder Polyisocyanate oder deren Gemische geeignet, sofern sie einen Schmelzpunkt oberhalb 40 °C aufweisen und sich durch bekannte Methoden in Pulverform mit Teilchengrösssen unter 200 μm überführen lassen. Es können aliphatische, cycloaliphatische, heterocyclische oder aromatische Polyisocyanate sein. Als Beispiele seien genannt: Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'-dimethyl-N,N'diphenylharnstoff (TDIH), Additionsprodukt von 2 Mol 1-Methyl-2,4-phenylen-diisocyanat mit 1 Mol 1,2-Ethandiol, 1,4-Butandiol, 1,4-Cyclohexan-di-methanol, oder Ethanolamin, das Isocyanurat des IPDI (IPDI-T).

Die genannten Additionsprodukte zeigen nicht nur als wässrige Dispersionen die erfindungsgemässen Vorteile. Additionsprodukte aus 1-Methyl-2,4-phenylen-diisocyanat und 1,4 Butandiol oder 1,2 Ethandiol besitzten auch in festen und flüssigen lösungsmittelhaltigen oder lösungsmittelfreien Systemen sehr vorteilhafte Eigenschaften. Diese zeigen sich vor allem hinsichtlich ihrer niedrigen Aushärtungs- bzw. Vernetzungstemperatur, die im Temperaturbereich unter 90°C liegt. Damit ist die Verwendung dieser Mischung ob nun weitgehend auf Wasser- oder Polyolbasis sehr vorteilhaft für Beschichtungen und Verklebungen temperaturempfindlicher Substrate.

Die Oberflächenstabilisierungsreaktion kann auf verschiedenen Wegen durchgeführt werden:

- Durch Dispersion des pulverförmigen Isocyanats in einer Lösung des Desaktivierungsmittels.
- Durch Eintragen einer Schmelze eines niederschmelzenden Polyisocyanats in eine Lösung des Desaktivierungsmittels in einem nichtlösenden flüssigen Dispersionsmittel.
- Durch Zugabe des Desaktivierungsmittels oder einer Lösung desselben, zur Dispersion der festen feinteiligen Isocyanate.

Die Konzentration des Desaktivierungsmittels soll 0.1 bis 25, bevorzugt 0.5 bis 8 Equivalentprozent betragen, bezogen auf die total vorhandenen Isocyanatgruppen.

Oft muss für den erfindungsgemässen Einsatz die Teilchengrösse der pulverförmigen Polyisocyanate, durch eine der Synthese nachgeschaltete Feindispergierung oder Nassmahlung auf eine Teilchengrösse im Bereich von 0.5 bis 20 μ gebracht werden. Hierfür eignen sich Dissolver, Dispergiergeräte von Rotor-Stator Typ, Rührwerkskugelmühlen, Perlund Sandmühlen, Kugelmühlen und Reibspaltmühlen, bei Temperaturen unter 40 °C. Je nach Polyisocyanat und Verwendung erfolgt die Vermahlung am desaktivierten Polyisocyanat, in Gegenwart des Desaktivierungsmittels, im nichtreaktiven Dispergiermittel oder Wasser mit nachfolgender Desaktivierung. Das gemahlene und oberflächenstabilisierte Polyisocyanat lässt sich auch aus den Mahl-Dispersionen abtrennen und trocknen.

Um die Oberflächendesaktivierung und die Vernetzungsreaktion zu steuern, können auch Katalysatoren zugegeben werden. Bevorzugt sind solche Katalysatoren, welche in wässeriger Lösung oder Dispersion hydrolysenstabil sind und später dann auch die wärmeaktivierte Reaktion beschleunigen. Beispiele für Urethankatalysatoren sind organische Zinn-, Eisen-, Blei-, Kobalt-, Wismuth-, Antimon-, Zink-Verbindungen oder ihre Mischungen. Alkylmercaptidverbindungen des Dibutylzinns werden auf Grund der höheren Hydrolysenstabilität bevorzugt.

Tertiäre Amine wie Dimethylbenzylamin, Diazabicyclo-undecen, sowie nichtflüchtige Polyurethanschaumkatalysatoren auf tertiärer Aminbasis können für spezielle Zwecke oder in Kombination mit Metallkatalysatoren verwendet werden, die katalanische Aktivität kann aber durch Umsetzung mit dem Kohlendioxyd der Luft beeinträchtigt werden.

Die Konzentration der Katalysatoren liegt im Bereich von 0.001 bis 3 %, bevorzugt 0.01% - 1% bezogen auf das reaktive System.

Als erfindungsgemässe Reaktionspartner der Polyisocyanate werden Polyurethane mit primären und sekundären Aminogruppen oder teilverseiftes Polyvinylacetat eingesetzt.

Diese Umsetzung erhöht die Reaktivität der funktionellen Gruppen des Polymeren gegenüber den Isocyanatgruppen, zu Lasten der Nebenreaktion mit Wasser.

Geeignet sind auch wasserlösliche hydroxyfunktionelle Bindemittel wie Polyvinylalkohol, teilverseiftes Polyvinylacetat, Hydroxyethylcellulose, Hydroxypropylcellulose, sowie wasserdispergierbare hydroxyfunktionelle Polyester, hydroxyfunktionelle Sulfopolyester, und Polyurethandispersionen, Dispersionen von Polyamidoaminen, welche Carboxyl-, Hydroxylprimäre oder sekundäre Aminogruppen tragen.

Ebenso können wässerige kolloidale Dispersionen oder kolloidale Lösungen mit Teilchengrössen zwischen 1 - 100 nm in Kolloidmühlen hergestellt werden, ausgehend von thermoplastischen Polymeren mit isocyanatreaktiven Gruppen. Beispiel sind höhermolekulare feste Epoxyharze, Poly-ethylen-vinylalkohol und Poly-ethylen-co-acrylsäure.

Das Verhältnis zwischen den Isocyanatgruppen in den oberflächenstabilisierten feinteiligen Polyisocyanaten und der Summe der Hydroxyl- und Aminogruppen der Polymeren im weitgehend wasserfreiem und festem Zustand soll im Bereich 0.1 bis 1.5 betragen.

In die resultierende hochviskose Paste oder niederviskose Mischung können weitere inerte oder funktionelle Zusätze eingemischt oder dispergiert werden. Zu den funktionellen Zusätzen gehören hydroxy- oder aminofunktionelle pulverförmige oder flüssige nieder- bis hochmolekulare Verbindungen, welche mit den festen Polyisocyanaten oberhalb der Reaktionstemperatur reagieren können. Die stöchiometrischen Verhältnisse sind entsprechend anzupassen. Als niedermolekulare Verbindungen werden Verbindungen mit Molekulargewichten zwischen 40 und 500 g/mol verstanden, unter hochmolekularen Verbindungen solche, deren Molekulargewichte zwischen 500 und 10000 g/mol liegen. Als Beispiele können angeführt werden: Niedermolekulare bis hochmolekulare flüssige Polyole oder/und Polyamine, feste polyfunktionelle Polyole oder/und aromatische Polyamine. Beispiele sind Triethanolamin, Butandiol, Trimethylolpropan, ethoxyliertes Bisphenol A, endständig ethoxylierte Polypropylenglykole, 3,5-Diethyl-toluylen-2,4- und 2-6-diamin, Poly-tetramethylenoxid-di-(p-aminobenzoat), Tris-hydroxyethyl-isocyanurat, Hydrochinonbis-hydroxyethylether, Pentaerythrit, 4,4'-Diamino-benzanilid, 4,4'-Methylen-bis-(2,6-diethylanilin).

Zu den inerten Zusätzen gehören beispielsweise Netzmittel, organische oder anorganische Verdickungsmittel, Weichmacher, Füllstoffe, Kunststoffpulver, Pigmente, Farbstoffe, Lichtstabilisatoren, Alterungsstabilisatoren, Korrosionsschutzmittel, Flammschutzmittel, Treibmittel, Haftharze, organofunktionelle Silane, kurzgeschnittene Fasern und gegebenenfalls geringe Mengen von inerten Lösungsmitteln.

Die Vorteile der vorliegenden Erfindung liegen in der Trennung von Applikation der wässrigen Dispersion von der Vernetzungsreaktion d.h. der endgültigen Aushärtung. Damit können z.B. an einem Ort Klebstofffilme auf Holz, Glas oder anderweitige Substrate oder Unterlage aufgetragen werden, diese vorgefertigten Fabrikate gelagert und/ oder verschickt werden und an einem anderen Ort zum Endprodukt ausgehärtet werden.

Ein weiterer Vorteil des Verfahrens und der Verwendung der entsprechenden Produkte liegen in der Verwendung von Wasser als Dispersionsmedium Der Energieverbrauch zur Herstellung der Dispersionen ist gering. Der Anteil organischer Lösungsmittel minimal, was in einer aus Umweltschutzgesichtspunkten sehr vorteilhaften Verarbeitung resultiert.

Wenn von einer wässerigen Polymerdispersion ausgegangen wird, liegt ein weiterer Vorteil darin, dass auch oberflächendesaktivierte Polyisocyanate mit einem Schmelzpunkt im Bereich 40 bis 150 °C ohne Probleme eingearbeitet werden können. Die Vernetzungstemperaturen können im Bereich von 35 °C bis 90 °C liegen. Mit diesen niedrigen Vernetzungstemperaturen können auch temperaturempfindliche Substrate mit diesem Einkomponentensystem durch Wärmeeinwirkung verklebt werden.

Die aus der wässrigen Suspension, Dispersion oder Lösung erhaltene Schicht oder Pulver lässt sich monatelang lagern. Je nach den Lösungseigenschaften des festen Films für das Polyisocyanat ist die Lagerdauer bei Raumtemperatur oder leicht erhöhten Temperaturen jedoch unterschiedlich. Die Lagerdauer des erfindungsgemässen Systems im wasserfreien und unvernetzten Zustand ist wenigstens das 3-fache, üblicherweise mehr als das 10-fache der gleichen Mischung mit den gleichen Polyisocyanaten, welche nicht oberflächen-desaktiviert sind. Bei +2°C sind die erfindungsgemässen Schichten oder Pulver mindestens sechs Monate lagerstabil, bei Raumtemperatur jedoch mindestens 1 Monat lagerstabil und erfindungsgemäss verarbeitungsfähig. Der Begriff latent-reaktiv bezeichnet den Zustand der im wesentlichen wasserfreien Schicht oder Pulvers in der das oberflächendesaktivierte Polyisocyanat und das mit Isocyanaten reaktive Polymer im wesentlich unvernetzten Zustand vorliegen.

Die Wärmezufuhr für die thermoplastische Verarbeitung sowie die Vernetzung kann vorzugsweise mit Konvektions- oder Strahlungswärme erfolgen. Die lagerstabile wässerige Suspension, Dispersion oder Lösung aus oberflächendesaktivierten feinteiligen Polyisocyanaten und dispergierten oder wasserlöslichen Polymeren mit isocyanatreaktiven Gruppen kann auf die Oberfläche des zu verklebenden oder zu beschichtenden Substrates appliziert werden, insbesondere durch Pinseln, Sprühen, Spritzen, Rakeln, Spachteln, Giessen, Tauchen, Extrudieren oder durch Walzauftrag oder im Druckverfahren aufgetragen werden.

Im Falle der Verklebung von Substraten kann man wahlweise wie folgt vorgehen:

1. Pressverklebung durch Fügen der Haftflächen bei Raumtemperatur und Erhöhen der Temperatur bis über die Erweichungstemperatur des Polymeren, aber unter der Reaktionstemperatur, dann Abkühlen auf Raumtemperatur. Es entsteht ein Verbund, der latent reaktiv ist. Dieser Verbund kann weiterbearbeitet und geformt werden, auch im platischen bzw. thermoplastischen Bereich des Polymers. Den endgültigen vernetzten Zustand erhält die Verklebung, wenn die Temperatur bis über die Aufdickungs- oder Reaktionstemperatur erhöht wird.

2. Pressverklebung durch Fügen der Haftflächen bei Raumtemperatur und Erhöhen der Temperatur bis über die Erweichungstemperatur des Polymeren, Ausbilden eines homogenen Klebstoffilms, der die Gegenfläche benetzt und haftet, Erhöhen der Temperatur bis über die Aufdickungs- oder Reaktionstemperatur und endgültige Vernetzung.

3. Die beschichtete Haftfläche wird durch Erhöhen der Temperatur bis über die Erweichungstemperatur des Polymeren in den thermoplastischen Zustand gebracht, mit einem zweiten Substrat gefügt und unter Pressung die Temperatur bis über die Aufdickungs- oder Reaktionstemperatur erhöht. Gegebenenfalls können im thermoplastischen Zustand des System weitere Verarbeitungsschritte durchgeführt werden.

Die lagerstabile wässerige Dispersion von oberflächendesaktivierten feinteiligen Polyisocyanaten und dispergierten oder wasserlöslichen Polymeren mit isocyanatreaktiven Gruppen kann in die Form eines latent-reaktiven Klebefilms, Klebebandes, Klebevlieses oder -gewebes gebracht werden, der beidseitig Haftung aufbauen kann. Zur Herstellung von trägerfreien Formen, wie Filmen oder Bändern, wird die erfindungsgemässe Dispersion auf ein nichthaftendes Trägerband oder Trennpapier appliziert und das Wasser bei Raumtemperatur oder bei Temperaturen bis zur Erweichungstemperatur des Polymers verflüchtigt. Der Klebstoffilm kann nach Abkühlen vom Träger gelöst werden und bis zur Verwendung trägerfrei gelagert werden. Alternativ kann der Klebstoffilm mit dem Trägerpapier zusammen gelagert werden.

Im Falle der Klebevliese oder -gewebe wird die reaktionsfähige Dispersion durch Sprühen, Spritzen, Rakeln, Giessen, Tauchen, Foulardieren, durch Walzauftrag oder im Druckverfahren appliziert, das Wasser bei Raumtemperatur oder bei Temperaturen bis zur Erweichungstemperatur des Polymers verflüchtigt, und das Klebevlies oder -gewebe, versehen oder imprägniert mit der latent wärmereaktiven Klebeschicht, bis zur Verwendung gelagert.

Die trägerfreien Klebefilme, Klebebänder, Klebvliese oder -gewebe dienen als Klebeschicht zwischen Substraten. Es ist auch möglich, Klebefilme, -vliese oder -gewebe einseitig auf eine Substratfläche im plastischen Zustand aufzubringen oder zu sintern. Dieses Laminat kann bis zur endgültigen Verklebung mit einer zweiten Substratoberfläche bei Raumtemperatur gelagert werden.

Die lagerstabile wässerige Dispersion von oberflächendesaktivierten feinteiligen Polyisocyanaten und dispergierten oder wasserlöslichen Polymeren mit isocyanatreaktiven Gruppen kann in die Form eines latentreaktiven Pulvers gebracht werden. Diese Pulver können als latentreaktive Klebestoffe oder zu Beschichtungszwecken, wie Pulverlacke, verwendet werden.

Zur Herstellung von Pulvern aus den erfindungsgemässen Dispersionen können diese in einem Sprühturm versprüht werden. Die Temperatur der von unten eingeleiteten Luft soll unter der Erweichungstemperatur des Polymers und der Reaktionstemperatur des oberflächenblockierten Polyisocyanats bleiben.

Alternativ können die erfindungsgemässen Dispersionen auf die nicht haftende Oberfläche eines umlaufenden Bandes mit dehäsiven Oberflächen gesprüht oder mit einem Druckverfahren appliziert werden. Nach dem Verflüchtigen des Wassers werden die trockenen Partikel vom Band abgeschabt, gegebenenfalls gesiebt und klassiert, und bis zur Verwendung gelagert.

Latent reaktive Pulver können auch aus trägerfreien Filmen oder Bändern durch Mahlprozesse, gegebenenfalls bei tiefen Temperaturen, hergestellt werden. Sie dienen als wärmereaktive vernetzbare Klebe- oder als Beschichtungspulver. Applikationsgeräte und -methoden sind Stand der Technik und dem Fachmann bekannt.

Die mit dem Verfahren hergestellten latentreaktiven vorgefertigten Schichten dienen vorzugsweise als thermisch belastbare Klebeverbindung für flexible oder feste Substrate wie z.B. Metallen, Kunststoffen, Glas, Holz, Holzverbundstoffe, Karton, Folien, synthetischen Flächengebilden, Textilien,.

Die so hergestellten reaktiven Beschichtungspulver lassen sich auch mit den Applikationsmethoden für Pulverlacke verarbeiten. Die Vemetzungstemperatur kann je nach Wahl des Polyisocyanats so niedrig sein, dass wärmeempfindliche Substrate, wie Kunststoffe, Textilien und Holz, ohne thermische Schädigung beschichtet werden können. Das Verfahren erlaubt auch die Beschichtungspulver auf dem Substrat nur zu sintern oder zu einer geschlossenen Schicht zu schmelzen. Die vollständige Vernetzung erfolgt dann bei einer späteren Wärmebehandlung, gegebenenfalls nach einem zusätzlichen mechanischen oder thermischen Bearbeitungschritt.

## Beispiele

A) Applikations- und Prüfverfahren, Lagerungen:

| Lagerung A | Dispersion bei Raumtemperatur applizieren, weitgehendes Entfernung des Wassers durch Verdunsten bei Raumtemperatur und/oder Eindsickern in die Unterlage, nach max. 3 Stunden Klebeflächen fügen, minimal 7 Tage bei Normalbedingungen lagern, dann 0.5 Std. auf 120 °C erhitzen (Objekttemperatur), wobei die Vemetzungsreaktion ausgelöst wird. Abkühlen und 24 Std. bei Normalbedingungen lagern. |
|---|---|
| Lagerung B | Wie Lagerung A, aber ohne Wärmebehandlung. |
| Lagerung C | Auf Klebefläche auftragen, weitgehendes Entfernung des Wassers durch Verdunsten bei Raumtemperatur und/oder Eindsickern in die Unterlage. Die mit Klebstoffschicht versehene Fläche offen an der Luft für mindestens 30 Tage liegen lassen. Klebeflächen fügen und unter Klammerdruck während 0.5 Std. auf 120 °C erhitzen, wobei die Vernetzungsreaktion ausgelöst wird. Abkühlen und 24 Std. bei Normalbedingungen lagern. |
| Lagerung D | Flüssige Dispersion mit SDSI während 30 Tagen bei Raumtemperatur lagern, dann auf Klebefläche applizieren. Weiter wie bei Lagerung A oder C |
| Abkürzung SDSI: | Surface Deactivated Solid Isocyanate oder oberflächendesaktivierte festes Isocyanat |

Prüfung der Temperaturbeständigkeit oder Wärmestandfestigkeit der Verklebungen: Prüflinge mit 100x20x5 mm$^3$ aus Buchenholz resp. 25x100xd mm$^3$ aus synthetischem Material wurden einfach überlappend press-verklebt, Ueberlappung 10 mm, Klebefläche 20x10 mm$^2$. Um bei der Heissverklebung die Nebenreaktionen von Wasser mit Isocyanaten möglichst auszuschalten, wurden die Holzprüflinge in einem Umluftofen unter Vakuum (Restdruck 0.1bar) während 0.5 Stunden auf 120°C erhitzt.

Für die Bestimmung der Temperaturfestigkeit nach Lagerungen A bis C wurden die Prüflinge senkrecht in den Umluftofen gehängt und mit 300 g belastet. Die Temperatur wurde alle 15

Minuten um 10 °C erhöht. Haftverlust der Klebeflächen führte zum Fallen der Gewichte.

Obere Prüftemperatur begrenzt auf 150 °C.

Bestimmung der Wasserbeständigkeit: Prüflinge im Wasser bei Normaltemperatur während 4 Tagen lagern. Qualitative Beurteilung der Festigkeit im nassen Zustand.

Es bedeuten:

Hohe und praktische unveränderte Festigkeit der Verklebung     +

Merklicher Abfall der Festigkeit     +/-

Verlust der Festigkeit oder Auseinanderfallen der Verklebung     -

Abweichende oder andere Prüfbedingungen oder Prüfungen sind jeweils angegeben.

<u>B) Herstellung der wässerigen Suspension von festem oberflächendesaktivertem Polyisocyanat: Allgemeine Vorschrift</u>

Unter dem Dissolver wurde die folgende Suspensionen von oberflächendesaktivierten Polyisocyanaten hergestellt:

| | | | Gewichtsteile |
|---|---|---|---|
| (1) | | Wasser | 106 |
| (2) | | Kelzan S, 3 %ige Lösung in Wasser (Monsanto) | 33 |
| (3) | | Polyoxyethylensorbitantrioleat | 1 |
| (4) | | Polyamin | 2 - 6 |
| (5) | | Polyisocyanat-Pulver, Partikelgrösse < 45 μm | 80 |
| | | | 222 - 226 |
| (4) Polyamine: Euretek 505 (Witco) Polyamidoamin Jeffamin T-403 (Huntsman) aminoterminiertes Polyoxypropylen | | | |

| Spezifische Beispiele | Gramm pro Equivalent | Gramm Einwaage | % Isocyanatgruppen desaktiviert |
|---|---|---|---|
| Beispiel 1 | | | |
| (1)(2)(3), Komponenten wie oben (4) Polyamidoamin Euretek 505, | 144 | 2.3 | 5.0 |
| (5) IPDI-Isocyanurat (IPDI-T) Polyisocyanat IPDI-T 1890/100 Hüls | 243 | 80 | |
| Beispiel 2 | | | |
| (1)(2)(3), Komponenten wie oben (4) Jeffamin T-403 (Huntsman) | 143 | 6 | |
| (5) 4,4-Diphenylmethandiisocyanat (MDI) | 125 | 80 | 6.6 |

Das oberflächendesaktivierte MDI wurde durch halbstündiges Mahlen dieser Suspension in einer gekühlten offenen Perlmühle (Glasperlen 1mm, 2500 Umdrehungen pro Minute) auf Teilchengrössen unter 5μm zerkleinert.

(fortgesetzt)

| Spezifische Beispiele | Gramm pro Equivalent | Gramm Einwaage | % Isocyanatgruppen desaktiviert |
|---|---|---|---|
| **Beispiel 3** | | | |
| (1)(2)(3), Komponenten wie oben (4) Polyamidoamin Euretek 505 | 144 | 3.7 | 5.0 |
| (5) 3,3'-Dimethyl-biphenyl-4,4'-di-isocyanat (TODI) | 132 | 80 | |
| **Beispiel 4** | | | |
| (1)(2)(3), Komponenten wie oben (4) Polyamidoamin Euretek 505, oder Jeffamin 403 | 144 | 3.3 | 5.0 |
| (5) Dimeres 1-Methyl-2,4-phenylendiisocyanat (TDI-U) | 174 | 80 | |
| **Beispiel 5** | | | |
| (1)(2)(3), Komponenten wie oben (4) Polyamidoamin Euretek 505, | 144 | 3.3 | 5.8 |
| (5) Urethan von 2 Mol 1-Methyl-2,4-phenylen und 1 Mol 1,2-Ethylenglykol (TDIxEG) | 205 | 80 | |
| **Beispiel 6** | | | |
| (1)(2)(3), Komponenten wie oben (4) Polyamidoamin Euretek 505, | 144 | 3.3 | 6.3 |
| (5) Urethan von 2 Mol 1-Methyl-2,4-phenylen und 1 Mol 1,4 Butandiol (TDIxBDO) | 219 | 80 | |
| **Vergleichsbeispiel 7** | | | |
| (5) Desmodur DA | 215 | Trimerisiertes Hexamethylendiisocyanat, hydrophilisiert, ca. 19.5 % NCO | |

C) Applikation und Prüfung der reaktiven Klebstoffdispersionen

Verwendete Klebstoffdispersionen:

| Jagotex KEM 2010 Ernst Jäger GmbH D-Düsseldorf | Vinylacetat-(Meth)acrylatdispersion, mit Hydroxylgruppen im Polymer und im Schutzkolloid, 55 % Feststoffe, Kontaktkleber mit Aktivierungstemperatur 60 - 80 °C. Mit Ammoniak neutralisiert. |
|---|---|

(fortgesetzt)

| Jagotex KEM 4008<br>Ernst Jäger GmbH<br>D-Düsseldorf | Acrylat-copolymer, 48 % Feststoff, haftklebrig, $T_g$ - 45 °C; mit Hydroxylgruppen im Polymer und im Schutzkolloid. |
|---|---|
| Dispercoll U 54<br>Bayer AG, D-Leverkusen | PUR-Dispersion, aliphatisches Isocyanat, 50 % Feststoff, mit primären und sekundären Aminogruppen. |

Herstellung der Klebstoffdispersionen. Allgemeine Vorschrift:

Es wurde mit dem Dissolver ein reaktiver Dispersionsklebstoff mit den angegebenen Polyisocvanaten wie folgt hergestellt:

| | | Gewichtsteile | Gewichtsteile |
|---|---|---|---|
| (1) | Klebstoffdispersion, ca. 50 % Festoff | 100 | pro 100 Polymer |
| (2) | Suspension von desaktivierten Polyisocyanat, ca. 35 %-ig | 16 | ca. 11.2 |
| (3) | Metatin Katalysator 715; Basis Dibutylzinnalkylmercaptid (Acima AG, CH-Buchs), | 1 | ca. 0.2 |
| | 10 %-ig in Diethylenglykol-dimethylether | $\overline{117}$ | |

Die Klebstoffmischungen wurden mit einer Spiralrakel auf die Klebeflächen von Buchenholzprüflingen aufgebracht, dann gemäss den Lagerungen A - C behandelt, dann geprüft wie angegeben. Das Auftragsgewicht betrug nach der Trocknung etwa 100 g/m$^2$.

Beispiel 8 bis 12

Vernetzungsversuche mit Klebstoffen basierend auf KEM 2010 (neutralisiert) und verschiedenen Suspensionen von Polyisocyanaten

| | Vergleichs-Beispiel 8 | Vergleichsbeispiel 9 | Beispiel 10 | Beispiel 11 | Beispiel 12 |
|---|---|---|---|---|---|
| Dispersions-Klebstoff mit SDSI-Suspension (Bem. 1) | Ohne SDSI | Desmodur DA (Bem. 2) | IPDI-T Susp. nach Beispiel 1 | MDI Susp. nach Beispiel 2 | TODI Susp. nach Beispiel 3 |
| Lagerung A:<br>30 Min. /120 °C<br>Wärmestandfestigkeit °C | 85 | > 150 | > 150 | > 150 | > 150 |
| Wasserlagerung | - | - | - | + | + |
| Lagerung B:<br>nur Normalbedingungen<br>Wärmestandfestigkeit °C | 55 | > 130 | 55 | 55 | 55 |
| Wasserlagerung | - | - | * | * | * |
| Lagerung C:<br>1 Monat offen, fügen,<br>dann 30 Min./120 °C,<br>Wärmestandfestigkeit °C | 55 | keine Kontakt-verklebung | > 150 | > 150 | > 150 |
| Wasserlagerung | - | | +/- | + | + |

*nicht geprüft
Bem. 1: SDSI ca. 11.2 T. pro 100 T. festes Polymer
Bem. 2: 13 T. Desmodur DA pro 100 T. festes Polymer

(fortgesetzt)

| Dispersions-Klebstoff mit SDSI-Suspension (Bem. 1) | Vergleichs-Beispiel 8 | Vergleichsbeispiel 9 | Beispiel 10 | Beispiel 11 | Beispiel 12 |
|---|---|---|---|---|---|
| | Ohne SDSI | Desmodur DA (Bem. 2) | IPDI-T Susp. nach Beispiel 1 | MDI Susp. nach Beispiel 2 | TODI Susp. nach Beispiel 3 |
| Lagerung D: 1 Monat flüssig bei Normalbed. dann Lagerung A. Wärmestandfestigkeit °C | * | 85 | * | > 150 | * |
| Wasserlagerung | * | - | * | + | * |

*nicht geprüft
Bem. 1: SDSI ca. 11.2 T. pro 100 T. festes Polymer
Bem. 2: 13 T. Desmodur DA pro 100 T. festes Polymer

Beispiele 13 bis 16

Vernetzungsversuche mit Klebstoffen basierend auf KEM 2010 (neutralisiert) und verschiedenen Suspensionen von Polyisocyanaten

| Dispersions-Klebstoff mit SDSI-Suspension (Bem. 1) | Beispiel 13 | Beispiel 14 | Beispiel 15 | Beispiel 16 |
|---|---|---|---|---|
| | TDI-U Susp. nach Beispiel 4 | TDIxEG Susp. nach Beispiel 5 | TDIxEG Susp. nach Beispiel 5 Einseitiger Auftrag | TDIxBDO Susp. nach Beispiel 6 |
| Lagerung A: 30 Min. / 120 °C Wärmestandfestigkeit °C | > 150 | > 150 | > 150 | > 150 |
| Wasserlagerung | + | + | + | + |
| Lagerung B: nur Normalbedingungen Wärmestandfestigkeit °C | 55 | 50 | * | * |
| Wasserlagerung | * | * | * | * |
| Lagerung C: 1 Monat offen, fügen, dann 30 Min./120 °C, Wärmestandfestigkeit °C | > 150 | > 150 | > 150 | > 150 |
| Wasserlagerung | + | + | + | + |
| Lagerung D: 1 Monat flüssig bei Normalbed. dann Lagerung A. Wärmestandfestigkeit °C | > 150 | * | * | * |

*nicht geprüft
Bem. 1: SDSI ca. 11.2 T. pro 100 T. festes Polymer

(fortgesetzt)

| Dispersions-Klebstoff mit SDSI-Suspension (Bem. 1) | Beispiel 13 | Beispiel 14 | Beispiel 15 | Beispiel 16 |
|---|---|---|---|---|
| | TDI-U Susp. nach Beispiel 4 | TDIxEG Susp. nach Beispiel 5 | TDIxEG Susp. nach Beispiel 5 Einseitiger Auftrag | TDIxBDO Susp. nach Beispiel 6 |
| Wasserlagerung | + | * | * | * |

*nicht geprüft
Bem. 1: SDSI ca. 11.2 T. pro 100 T. festes Polymer

Beispiele 17 bis 21:

Vernetzungsversuche mit Klebstoffen basierend auf Polyurethandispersion Dispercoll U 54 und verschiedenen Suspensionen von Polyisocyanaten

| Dispersions-Klebstoff mit SDSI-Suspension (Bem. 1) | Vergleichs-Beispiel 17 | Vergleichs-Beispiel 18 | Beispiel 19 | Beispiel 20 | Beispiel 21 |
|---|---|---|---|---|---|
| | Ohne SDSI | Desmodur DA (Bem. 2) | IPDI-T Susp. nach Beispiel 1 | TDI-U Susp. nach Beispiel 4 | TDIxEG Susp. nach Beispiel 5 |
| Lagerung A: 30 Min. / 120 °C Wärmestandfestigkeit °C | 120 | > 150 | > 150 | > 150 | > 150 |
| Wasserlagerung | +/- | + | + | + | + |
| Lagerung B: nur Normalbedingungen Wärmestandfestigkeit °C | 100 | > 150 | * | * | * |
| Wasserlagerung | +/- | + | * | * | * |
| Lagerung C: 1 Monat offen, fügen, dann 30 Min./120 °C, Wärmestandfestigkeit °C | 120 | keine Kontaktverklebung | > 150 | > 150 | > 150 |
| Wasserlagerung | +/- | | + | + | + |

* nicht geprüft
Bem. 1: SDSI ca. 11.2 T. pro 100 T. festes Polymer
Bem. 2: 13 T. Desmodur DA pro 100 T. festes Polymer

Beispiele 22 bis 24:

Herstellen eines thermoreaktiven Klebevlieses

Die Klebstoffdispersionen wurden mit Spiralrakel auf Spinnvliese aus Polyethylenterephtalat (Lutradur 7225, Flächengewicht 25 g/m2, Freudenberg KG, D-Weinheim) aufgetragen. Die Vliese wurden im frischem Zustand von der Unterlage getrennt und senkrecht hängend bei Normalbedingungen getrocknet.
Nach 10 tägiger Lagerdauer wurden die trockenen Vliese zwischen zwei Buchenhölzern von 5 mm Dicke unter einem mechanischem Druck von 2 kp/cm2 während 30 Minuten auf 120 °C erhitzt (Pressverklebung). Der Verbund wurde anschliessend während 24 Stunden drucklos bei Normalbedingungen gelagert. Folgende Eigenschaften wurden an den Prüflingen bestimmt:

| | Beispiel 22 | Beispiel 23 | Beispiel 24 |
|---|---|---|---|
| Klebstoff nach Beispiel<br>mit Polymer<br>SDSI Kurzbezeichnung | 13<br>KEM 2010<br>TDI-U | 13<br>KEM 2010<br>TDI-U | 16<br>KEM 2010<br>TDIxBDO |
| Auftragsgewicht, trocken; g/m2 | 88 | 25 | 34 |
| Wärmestandfestigkeit der Klebefugen °C | > 150 | > 150 | > 150 |

Beispiel 25

Beispiel 22 wurde analog wiederholt, wobei auf Spinnvliese verzichtet wurde. Es entstand eine komplett trägerfreie, feste Klebeschicht, die bei Prüfung auf Wärmestandfestigkeit die zu Beispiel 22 analogen Werte zeigte.

Beispiel 26

Verkleben von glasfaserverstärkten Polyesterprüflingen

Auf Prüflinge mit den Dimensionen 100x25x3 mm$^3$ wurde die reaktive Klebstoffdispersion nach Beispiel 14 appliziert, Trockengewicht ca. 100 g/m$^2$. Nach Verflüchtigung des Wassers wurden die Prüflinge 3 Tage bei Normalbedingungen gelagert. Die beschichteten Flächen wurden auf 80 °C (das heisst knapp über dem Erweichungspunkt des Polymers) erwärmt und eine einfach überlappende Pressverklebung, Klebefläche 200 mm$^2$, erzeugt. Sofort wurde die Temperatur auf 120 °C erhöht und 30 Minuten gehalten.. Bei dieser Temperatur erfolgt die Vernetzung. Anschliessend lagern während 24 Stunden bei Normalbedingungen. Es wurden bestimmt:

| Zugscherfestigkeit (100 mm pro Minute Zuggeschwindigkeit) | 2.21 MPa |
|---|---|
| Wärmestandfestigkeit | > 150 °C |

Beispiel 27

Eine Klebstoffzusammensetzung wurde analog Beispiel 13 hergestellt und die wässrige Dispersion bei Raumtemperatur aufgetragen. Das Entfernen des Wassers erfolgte durch Verdunsten bei Raumtemperatur und/oder Eindringen in die Unterlage. Die feste Schicht wurde über einen Zeitraum von 5 Monaten bei +2°C offen liegen gelassen. Die Klebeflächen wurden danach zusammengefügt und unter Klammerdruck während 0.5 Std. auf 120°C erhitzt, wobei die Vernetzungsreaktion ausgelöst wurde. Abschliessend erfolgte eine 24 stündige Lagerung bei Raumtemperatur bei Raumtemperatur. Die Resultate hinsichtlich Wärmestandfestigkeit und Wasserlagerung entsprachen denen in Beispiel 13.

Beispiel 28

Herstellung, Applikation und Lagerung erfolgte analog Beispiel 26. Danach wurde das aus Unterlage und fester Klebstoffschicht bestehende Gesamtsystem dreimal auf 80°C über den Erweichungspunkt des Polymeren erwärmt und wieder abgekühlt. Anschliessend erfolgte das Aushärten durch halbstündiges Erwärmen auf 120°C. Die Resultate hinsichtlich Wärmestandfestigkeit und Wasserlagerung entsprachen denen in Beispiel 13.

Beispiel 29

Eine wässrige Dispersion, die der Zusammensetzung aus Beispiel 13 entspach, wurde mittels Sprühtrocknung in ein festes weitgehend wasserfreies Pulver überführt. Die Applikation, Lagerung und Vernetzung erfolgte analog Lagerung C. Die Resultate hinsichtlich Wärmestandfestigkeit und Wasserlagerung entsprachen denen in Beispiel 13.

**Patentansprüche**

**1.**   Wässrige Dispersion enthaltend wenigstens ein oberflächendesaktiviertes festes feinteiliges Polyisocyanat und wenigstens ein isocyanatreaktives Polymer, **dadurch gekennzeichnet, dass** das isocyanatreaktive Polymer ausgewählt ist aus der Gruppe bestehend aus einer wässrigen Dispersion aus Polyurethanen mit primären und sekundären Aminogruppen oder einer wässrigen Dispersion aus teilverseiftem Polyvinylacetat, welche nach Trocknung der Dispersion unterhalb der Reaktionstemperatur des oberflächendesaktivierten Polyisocyanats die Ausbildung eines festen Films ermöglichen.

2. Wässrige Dispersion gemäß Anspruch 1, **dadurch gekennzeichnet, dass** das Polyisocyanat einen Schmelzpunkt im Bereich von 40°C bis 150°C aufweist.

3. Wässrige Dispersion gemäß Anspruch 1 oder 2, **dadurch gekennzeichnet, dass** das Polyisocyanat eine Teilgröße von 0,5 μm bis 20 μm aufweist.

4. Wässrige Dispersion gemäß einem der Ansprüche 1 bis 3, **dadurch gekennzeichnet, dass** das Polyisocyanat ausgewählt ist aus der Gruppe bestehend aus Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'-dimethyl-N,N'-diphenylharnstoff (TDIH), Isocyanurat des Isophorondiisocyanats (IPDI-T).

5. Wässrige Dispersion gemäß Anspruch 4, **dadurch gekennzeichnet, dass** das Polyisocyanat Diphenylmethan-4,4'-diisocyanat (MDI) mit einer Teilchengröße unter 5 μm ist.

**Claims**

1. Aqueous dispersion containing at least one surface-deactivated solid fine-particle polyisocyanate and at least one isocyanate-reactive polymer, **characterised in that** the isocyanate-reactive polymer is selected from the group consisting of an aqueous dispersion of polyurethanes with primary and secondary amino groups or an aqueous dispersion of partially saponified polyvinyl acetate, which after drying of the dispersion below the reaction temperature of the surface-deactivated polyisocyanate allow the formation of a solid film.

2. Aqueous dispersion according to claim 1, **characterised in that** the polyisocyanate displays a melting point in the range from 40°C to 150°C.

3. Aqueous dispersion according to claim 1 or 2, **characterised in that** the polyisocyanate displays a particle size of 0.5 μm to 20 μm.

4. Aqueous dispersion according to one of claims 1 to 3, **characterised in that** the polyisocyanate is selected from the group consisting of diphenyl methane-4,4'-diisocyanate (MDI), naphthaline-1,5-diisocyanate (NDI), 3,3'-dimethyl biphenyl-4,4'-diisocyanate (TODI), dimeric 1-methyl-2,4-phenylene diisocyanate (TDI-U), 3,3'-diisocyanato-4,4'-dimethyl-N,N'-diphenyl urea (TDIH), isocyanurate of isophorone diisocyanate (IPDI-T).

5. Aqueous dispersion according to claim 4, **characterised in that** the polyisocyanate is diphenyl methane-4,4'-diisocyanate (MDI) with a particle size below 5 μm.

**Revendications**

1. Dispersion aqueuse contenant au moins un polyisocyanate solide en fines particules et désactivé en surface et au moins un polymère Oréactif aux isocyanates, **caractérisée en ce que** le polymère réactif aux isocyanates est choisi dans le groupe composé d'une dispersion aqueuse de polyuréthanes avec des radicaux amino primaires et secondaires ou d'une dispersion aqueuse d'acétate polyvinylique partiellement saponifié qui permettent la formation d'un film solide après séchage de la dispersion en dessous de la température de réaction du polyisocyanate désactivé en surface.

2. Dispersion aqueuse conformément à la revendication 1, **caractérisée en ce que** le polyisocyanate présente un point de fusion dans une gamme de 40°C à 150°C.

3. Dispersion aqueuse conformément à l'une des revendications 1 ou 2, **caractérisée en ce que** le polyisocyanate présente une taille des particules de 0,5 μm à 20 μm.

**4.** Dispersion aqueuse conformément à l'une des revendications 1 à 3, **caractérisée en ce que** le polyisocyanate est sélectionné dans le groupe composé de diphénylméthane-4,4'-diisocyanate (MDI), de naphtalène-1,5-diisocyanate (NDI), de 3,3'-diméthylbiphényl-4,4'-diisocyanate (TODI), de 1-méthyl-2,4-phénylènediisocyanate (TDI-U) dimère, de 3,3'-diisocyanato-4,4'-diméthyl-N,N'-diphénylurée (TDIH), d'isocyanurate de diisocyanate isophoronique (IPDI-T).

**5.** Dispersion aqueuse selon la revendication 4, **caractérisée en ce que** le polyisocyanate est le diphénylméthane-4,4'-diisocyanate (MDI) avec une taille des particules inférieure à 5 μm.